# EUROPÄISCHE PATENTSCHRIFT

(11) **EP 3 027 439 B1**
(45) Veröffentlichungstag und Bekanntmachung des Hinweises auf die Patenterteilung: **24.10.2018**
(21) Anmeldenummer: 14739357.3
(22) Anmeldetag: 10.07.2014
(51) Int. Cl.: B60G 11/60, B60G 17/02, B60G 21/055, B60G 21/06, B60G 21/05

(54) **DREHFEDERSTABSYSTEM FÜR EINE RADAUFHÄNGUNG EINES KRAFTFAHRZEUGS**
TORSION BAR SYSTEM FOR A SUSPENSION OF A MOTOR VEHICLE
SYSTÈME À BARRE DE TORSION POUR UNE SUSPENSION D'UN VEHICULE

(30) Priorität: 31.07.2013 DE 102013012755
(43) Veröffentlichungstag der Anmeldung: 08.06.2016
(73) Patentinhaber: Audi AG, 85045 Ingolstadt (DE)
(72) Erfinder: SCHMITT, Joachim, 85051 Ingolstadt (DE)
(74) Vertreter: Reichert, Thomas Klaus
(86) Internationale Anmeldenummer: PCT/EP2014/001888
(87) Internationale Veröffentlichungsnummer: WO 2015/014439

(56) Entgegenhaltungen:
- EP-A1- 2 070 743
- DE-A1- 2 825 176
- DE-A1-102006 009 524
- DE-A1-102009 005 899
- FR-A1- 2 874 860

## Beschreibung

Die vorliegende Erfindung betrifft ein Drehfederstabsystem für eine Radaufhängung eines Kraftfahrzeugs gemäß dem Oberbegriff des Patentanspruchs 1. Ein derartiges Drehfederstabsystem is aus der DE 10 2006 009 524 A1 bekannt.

Ein Drehfederstabsystem der gattungsgemäßen Art beschreibt zum Beispiel die DE 10 2009 005 899 A1, bei der je Fahrzeugseite ein über eine Motor-Getriebe-Einheit bzw. einen Aktuator variabel vorspannbarer Drehfederstab über einen Abtriebshebel auf jeweils ein Radaufhängungselement der beidseitigen Radaufhängungen von Kraftfahrzeugen wirkt. Das Drehfederstabsystem bildet einen aktiven Drehsteller oder Stabilisator, der zugleich als Speicherfeder wirkend eine Niveauverstellung der Karosserie des Kraftfahrzeugs ermöglicht und zudem Wank- und Nickneigungen entgegen wirken kann. Der Drehfederstab ist aus Bauraumgründen zumindest zweiteilig ausgeführt, und zwar mit einem quer verlaufenden, zentralen Vollstab und einem äußeren Rohrstab. Diese sind zur Erzielung der erforderlichen Federeigenschaften in Reihe geschaltet, wobei sich der Vollstab im Rücktrieb durch den in Hohlwellenbauart ausgeführten Aktuator erstreckt.
Die Aufgabe der Erfindung besteht darin, ein Drehfederstabsystem der gattungsgemäßen Art bereitzustellen, das bei geringem Mehraufwand noch weiter verbesserte Federeigenschaften insbesondere bei fahrdynamischen Belastungen aufweist.

Die Aufgabe ist durch die Merkmale des Patentanspruchs 1 gelöst. Vorteilhafte und besonders zweckmäßige Weiterbildungen der Erfindung sind Gegenstand der Unteransprüche.

Erfindungsgemäß wird vorgeschlagen, dass die beiden etwa in der Fahrzeuglängsmitte axial benachbarten Enden der Drehfeder über zumindest ein zusätzliches Drehfederelement miteinander gekoppelt sind. Überraschend gelingt es mit dieser Auslegung, trotz der gängigen, getrennten Ansteuerung des Drehfederstabsystems insbesondere bei dynamisch auftretenden Spitzenbelastungen in den Radaufhängungen eine verbesserte Lastverteilung in den Aktuatoren zu erzielen, die eine gleichmäßigere Beanspruchung der Bauteile und einen verbesserten Abbau von Überbelastungen bewirkt.

Besonders bevorzugt kann dabei das Drehfederelement eine über den Federweg progressive Kennung aufweisen. Dadurch sind die Aktuatoren bei kleineren, wechselseitigen Fahrbahnanregungen weitgehendst entkoppelt. Bei größeren Verdrehwinkeln steigt die Drehfederrate an. So kann zum Beispiel beim Ausgleich von großen Wankwinkeln und gleichzeitiger Anregung durch einen Stoß die auftretende Spitzenlast über das Drehfederelement auf den anderen Aktuator übertragen werden. Die Spitzenlasten, die in der Bauteildimensionierung berücksichtigt werden müssen, sind kleiner. Die Bauteile können daher leichter und kostengünstiger ausgeführt werden bei gleichzeitig erhöhtem Schutz gegen Bauteilversagen.

Das Drehfederelement kann des Weiteren durch einen mit den stirnseitigen Enden der Drehfederstäbe mittel- oder unmittelbar verbundenen Elastomerkörper mit bevorzugt rotationssymmetrischem Außenumfang gebildet sein..

Besonders bevorzugt kann das Drehfederelement aus einem zwischen zwei im Durchmesser größeren Lagerplatten einvulkanisierten Elastomerkörper gebildet sein, wobei an den Lagerplatten mit der Steckverzahnung der Drehfederstäbe zusammenwirkende Mitnehmer vorgesehen sind. Daraus resultiert eine robuste und montagegünstige Konstruktion des Drehfederelements, in das gegebenenfalls noch in Umfangsrichtung wirkende Endanschläge integriert sein könnten. Die Mitnehmer können bevorzugt innenverzahnte Lagerhülsen sein, die mit der Steckverzahnung des Vollstabs der Drehfederstäbe zusammenwirken. Mit dieser Steckverzahnung kann demzufolge der Vollstab sowohl mit dem Rohrstab als auch mit dem als Montageeinheit ausgeführten Drehfederelement gekoppelt werden.

In einer insbesondere hinsichtlich der Anordnung im Kraftfahrzeug vorteilhaften Ausgestaltung der Erfindung kann der Elektromotor des Aktuators achsparallel zum Drehfederstab angeordnet sein und mittels eines Umschlingungstriebs mit einem Abtriebsrad in Hohlwellenbauart auf den Rohrstab abtreiben. Dies kann entweder im Direktantrieb oder aber zur Verminderung der Belastung des Umschlingungsmittels, zum Beispiel einer Kette oder eines Zahnriemens, über ein hochübersetzendes Getriebe erfolgen, wobei der Umschlingungstrieb das auf das koaxial zum Rohrstab angeordnete und in Hohlwellenbauart ausgeführte Getriebe und dieses auf den Rohrstab abtreibt.

Alternativ können die Aktuatoren mit dem Elektromotor und dem Getriebe in an sich bekannter Weise in Hohlwellenbauart ausgeführt sein und koaxial zum Drehfederstab auf den Rohrstab abtreiben.

Mehrere Ausführungsbeispiele der Erfindung sind im Folgenden anhand der beigefügten, schematischen Zeichnung näher erläutert. Es zeigen:
- Fig. 1: in einer Draufsicht ein Drehfederstabsystem für eine links- und rechtsseitige Radaufhängung eines Kraftfahrzeugs, mit jeweils einem quer im Kraftfahrzeug ausgerichteten Drehfederstab, der über einen Aktuator und einen Umschlingungstrieb verstellbar ist und auf einen Abtriebshebel wirkt;
- Fig. 2: einen Längsschnitt entlang der Schnittebene A-A aus der Fig. 1 durch das Drehfederstabsystem;
- Fig. 3: eine Ansicht analog zur Fig. 1 auf ein Drehfederstabsystem mit Aktuatoren, jeweils einem Umschlingungstrieb und einem koaxial zu den Drehfederstäben angeordneten Getriebe;
- Fig. 4: einen Längsschnitt entlang der Schnittebene B-B aus der Fig. 3 durch das Drehfederstabsystem; und
- Fig. 5: eine Ansicht eines zusätzlichen Drehfederelements mit Steck-verbindung des die beiden Drehfederstäbe koppelnden Drehfeder-elements.

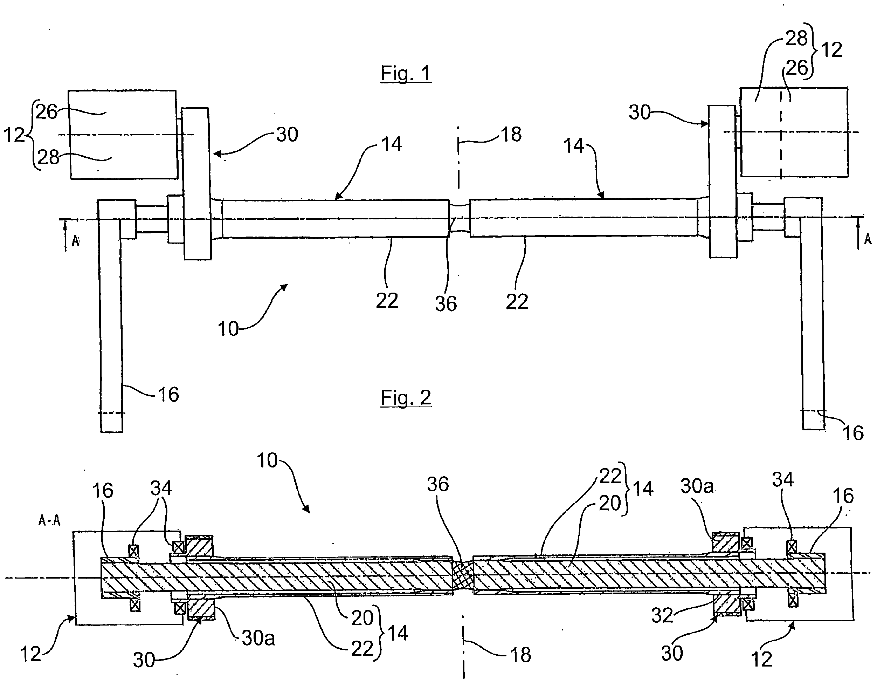

In den Fig. 1 und 2 ist ein Drehfederstabsystem 10 dargestellt, das sich aus zwei jeweils über einen Aktuator 12 verstellbaren Drehfederstäben 14 zusammensetzt. Die linke Hälfte und die rechte Hälfte des Drehfederstabsystems 10 sind spiegelbildlich gleich ausgeführt und deren Bauteile sind soweit ersichtlich mit gleichen Bezugszeichen versehen.

Jeder der Drehfederstäbe 14 (Fig. 2) erstreckt sich in der Fahrzeugquerrichtung y von einem äußeren Abtriebshebel 16 bis nahezu zur senkrechten Fahrzeugmittelebene 18 und setzt sich aus einem Vollstab 20 und einem koaxial angeordneten Rohrstab 22 zusammen, die über eine etwa in der Fahrzeugmitte 18 liegende Steckverzahnung 24 kraftschlüssig zusammengeschaltet sind.

Der jeweils außen positionierte Abtriebshebel 16 ist gelenkig mit einem Radführungselement (nicht dargestellt) der links- und rechtsseitigen Radaufhängung des Kraftfahrzeugs verbunden. Das Radführungselement kann beispielsweise ein Querlenker oder ein Radträger sein, an dem der Abtriebshebel 16 unter Zwischenschaltung einer Koppelstange angelenkt ist.

Der am Fahrzeugaufbau oder an einem Hilfsrahmen befestigte Aktuator 12 setzt sich aus einem achsparallel zur Drehfeder 14 angeordneten Elektromotor 26, einem hochübersetzenden Getriebe 28 (zum Beispiel Harmonic-Drive-Getriebe) und einem Umschlingungstrieb 30 zusammen, der auf den Rohrstab 22 abtreibt, und zwar an dessen, der Steckverzahnung 24 gegenüberliegenden Ende.

Der Umschlingungstrieb 30, bevorzugt ein Zahnriementrieb, treibt auf ein Riemenrad 30a (Fig. 2) ab, das auf dem Rohrstab 22 über eine weitere Steckverzahnung 32 in Umfangsrichtung formschlüssig gehalten ist.

Der Rohrstab 22 und der durch diesen hindurchgeführte Vollstab 20 sind über nur angedeutete Lager 34 (Wälz- oder Gleitlager) im Bereich des Abtriebshebels 16 und des Umschlingungstriebs 30 in einem fahrzeugfesten Gehäuse (nicht dargestellt) drehbar gelagert; das Gehäuse kann beispielsweise eine Baueinheit mit dem Aktuator 12 bilden.

Wie insbesondere die Fig. 2 zeigt, sind die Vollstäbe 20 (dies können aber auch die Rohrstäbe 22 sein) an deren in der Fahrzeugmitte 18 liegenden Enden über ein Drehfederelement 36 miteinander gekoppelt, so dass zum Beispiel über den linken Aktuator 12 eingesteuerte Stellkräfte von dem linken Drehfederstab 14 auf den rechten Drehfederstab 14 übertragen werden oder umgekehrt vom Abtriebshebel 16 ausgehende Federkräfte auf den rechten Drehfederstab 14 wirken.

Das Drehfederelement 36 ist bevorzugt durch einen Elastomerkörper mit rotationssymmetrischem Außenumfang gebildet und konstruktiv so ausgelegt, dass es eine progressiv zunehmende Federrate aufweist. Dies kann zum Beispiel durch nicht dargestellte Ausnehmungen und Stege im Elastomerkörper bewirkt werden, die bei anfänglich niedriger Federrate und flacher Kraft-Verdrehwinkel-Kennlinie in eine Kennlinie mit stark ansteigendem Gradienten übergeht.

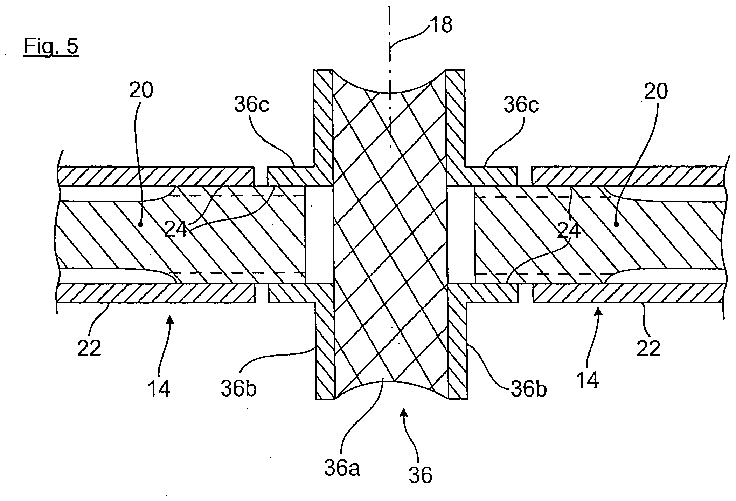

Die Fig. 5 zeigt ein bevorzugtes Ausführungsbeispiel des Drehfederelements 36, das sich im Wesentlichen aus einem rotationssymmetrischen Elastomerkörper 36a und zwei diesen einschließenden Lagerplatten 36b zusammensetzt, die zum Beispiel durch Vulkanisieren fest miteinander verbunden sind.

An den Lagerplatten 36b sind als Mitnehmer dienende Lagerhülsen 36c befestigt, die eine mit den Vollstäben 20 der Drehfederstäbe 14 kompatible Steckverzahnung 24 aufweisen und auf einen die Rohrstäbe 22 überragenden Abschnitt der Vollstäbe 20 und in Umfangsrichtung formschlüssig aufgesteckt sind.

Über das im Durchmesser zum Beispiel um den Faktor 3 größere Drehfederelement 36 gemäß Fig. 5 können in der beschriebenen, progressiv zunehmenden Federrate Federkräfte übertragen werden. Ferner kann das Drehfederelement 36 montageeinfach an die Drehfederstäbe 14 angebaut bzw. in das Drehfederstabsystem 10 integriert werden.

Gegebenenfalls können an den Lagerplatten 36b in Umfangsrichtung wirkende Anschläge vorgesehen sein, die eine definierte Drehwinkelbegrenzung für das Drehfederelement 36 bzw. den Elastomerkörper 36a bilden.

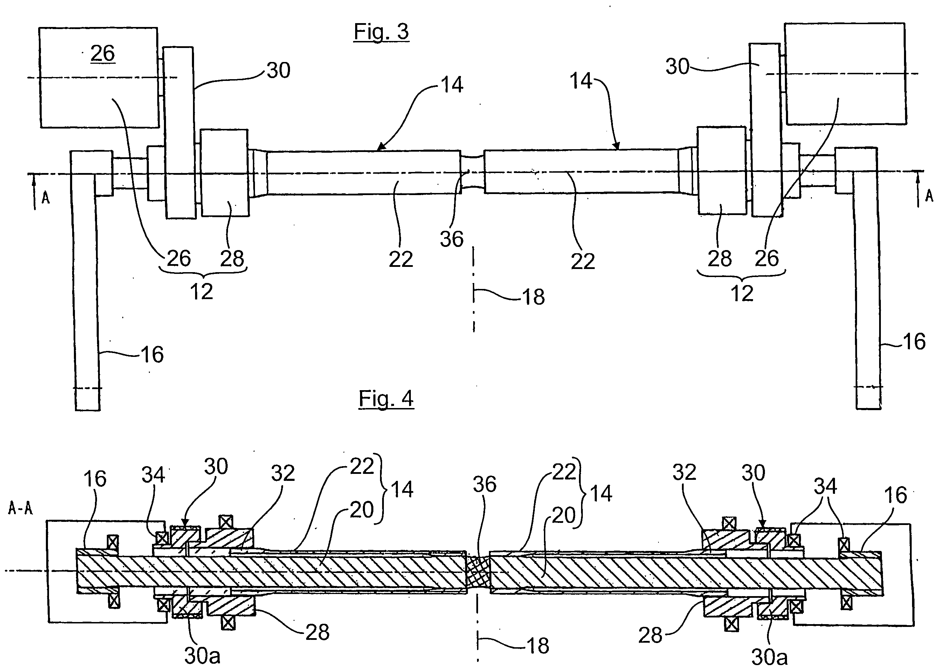

Die Fig. 3 und 4 zeigen ein alternatives Ausführungsbeispiel des Drehfederstabsystems 10, das nur soweit beschrieben ist, als es sich von der Ausführung gemäß den Fig. 1 und 2 unterscheidet. Funktionell gleiche Teile sind mit gleichen Bezugszeichen versehen.

Alternativ zur vorstehenden Ausführung ist das hochübersetzende Getriebe 28 in Hohlwellenbauart ausgeführt und wie das Riemenrad 30a des Umschlingungstriebs 30 ebenfalls um den Rohrstab 22 positioniert.

Damit treibt der Elektromotor 26 über den Zahnriemen des Umschlingungstriebs 30 das Riemenrad 30a und dieses das axial benachbarte Getriebe 28 an, dessen Abtriebselement dann der Rohrstab 22 über die Steckverzahnung 32 entsprechend betätigt. Das Getriebe 28 kann zum Beispiel ein Harmonic-Drive-Getriebe oder ein Zykloidgetriebe bekannter Bauart sein.

In einer weiteren Ausführungsvariante des Drehfederstabsystems 10 (nicht dargestellt) kann auch der Elektromotor 26 in Hohlwellenbauart um die Rohrstab 22 angeordnet sein, wobei dann der Umschlingungstrieb 30 entfällt und die hohle Abtriebswelle des Elektromotors 26 auf das Getriebe 28 wirken würde.

Die Erfindung ist nicht auf die beschriebenen Ausführungsbeispiele beschränkt. Die Drehfederstäbe 14 könnten gegebenenfalls auch durch zwei seriell geschaltete Rohrstäbe 22 und einen Vollstab 20 aus Federstahl gebildet sein, wobei das Drehfederelement 36 beide Drehfederstäbe 14 entsprechend koppelt. Gegebenenfalls kann das Drehfederelement 36 auch durch ein in der Funktion gleiches Federelement mit in Umfangsrichtung ausgerichteten Schraubendruckfedern ähnlich einer Kupplungs-Mitnehmerscheibe in Kraftfahrzeugen ausgebildet sein.

## Patentansprüche

1. Drehfederstabsystem für eine Radaufhängung eines Kraftfahrzeugs, mit je Fahrzeugseite einem quer zur Fahrzeuglängsmitte (18) ausgerichteten Drehfederstab (14), der über einen mit Bezug zur Fahrzeuglängsmitte (18) äußeren Abtriebshebel (16) auf jeweils ein Radführungselement der Radaufhängung mit veränderlicher Vorspannung wirkt, wobei der Drehfederstab (14) mittels eines Aktuators (12) mit einem Torsionsmoment beaufschlagbar ist, **dadurch gekennzeichnet, dass** die Drehfederstäbe (14) an deren beiden in der Fahrzeuglängsmitte (18) axial benachbarten Enden über zumindest ein zusätzliches Drehfederelement (36) miteinander gekoppelt sind.

2. Drehfederstabsystem nach Anspruch 1, **dadurch gekennzeichnet, dass** das Drehfederelement (36) eine mit zunehmender darauf wirkendem Torsionsmoment progressive Kennung aufweist.

3. Drehfederstabsystem nach Anspruch 1 oder 2, **dadurch gekennzeichnet, dass** das Drehfederelement (36) durch einen mit den stirnseitigen Enden der Drehfederstäbe (14) verbundenen Elastomerkörper (36a) mit rotationssymmetrischen Außenumfang aufweist.

4. Drehfederstabsystem nach einem der vorhergehenden Ansprüche, **dadurch gekennzeichnet, dass** das Drehfederelement (36) aus einem zwischen zwei im Durchmesser größeren Lagerplatten (36b) einvulkanisierten Elastomerkörper (36a) gebildet ist, und dass an den Lagerplatten (36b) mit einer Steckverzahnung (24) der Drehfederstäbe (14) zusammenwirkende Mitnehmer (36c) vorgesehen sind.

5. Drehfederstabsystem nach Anspruch 4, **dadurch gekennzeichnet, dass** die Mitnehmer (36c) innenverzahnte Lagerhülsen sind, die mit der jeweiligen Steckverzahnung (24) der Drehfederstäbe (14) zusammenwirken.

6. Drehfederstabsystem nach einem der vorhergehenden Ansprüche, **dadurch gekennzeichnet, dass** der Aktuator (12) aus einem Elektromotor (26) und einem Getriebe (28) gebildet ist, und dass der Elektromotor (26) des Aktuators (12) achsparallel zu den Drehfederstäben (14) angeordnet ist und mittels eines Umschlingungstriebs (30) mit einem Abtriebsrad (30a) in Hohlwellenbauart auf die Rohrstab (22) abtreibt.

7. Drehfederstabsystem nach Anspruch 6, **dadurch gekennzeichnet, dass** der Umschlingungstrieb (30) auf das koaxial zu den Drehfederstäben (14) und in Hohlwellenbauart ausgeführte Getriebe (28) und dieses auf die Drehfederstäbe (14) abtreibt.

8. Drehfederstabsystem nach einem der vorhergehenden Ansprüche 1 bis 5, **dadurch gekennzeichnet, dass** der Aktuator (12) mit dem Elektromotor (26) und dem Getriebe (28) in Hohlwellenbauart ausgeführt ist und koaxial zu den Drehfederstäben (14) abtreibt.

9. Drehfederstabsystem nach einem der vorhergehenden Ansprüche, **dadurch gekennzeichnet, dass** jeder der Drehfederstäbe (14) zumindest zweigeteilt ist, und zwar mit einem zur der Fahrzeugmitte (18) verlaufenden Rohrstab (22) und einem radial inneren Vollstab (20), wobei der Vollstab (20) am Aktuator (12) angebunden ist und dieser im Rücktrieb durch den Rohrstab (22) hindurch mittel- oder unmittelbar mit dem Abtriebshebel (16) verbunden ist.

## Claims

1. Torsion spring bar system for a wheel suspension of a motor vehicle, having on each side of the vehicle a torsion spring bar (14) aligned transverse to the vehicle longitudinal centre (18) which acts with changing pretension via an output lever (16) external in relation to the vehicle longitudinal centre (18) on respectively one wheel guide element of the wheel suspension, wherein a torsional moment can be applied to the torsion spring bar (14) by means of an actuator (12), **characterised in that** the torsion spring bars (14) are coupled to one another via at least one additional torsion spring element (36) at their two ends axially adjacent in the vehicle longitudinal centre (18).

2. Torsion spring bar system according to claim 1, **characterised in that** the torsion spring element (36) has a characteristic value which is progressive with increasing torsion moment acting thereon.

3. Torsion spring bar system according to claim 1 or 2, **characterised in that** the torsion spring element (36) has an elastomer body (36a) connected by to the front-side ends of the torsion spring bars (14) with rotationally-symmetric outer circumference.

4. Torsion spring bar system according to any one of the preceding claims, **characterised in that** the torsion spring element (36) is formed from an elastomer body (36a) vulcanised in between two bearing plates (36b) which are larger in diameter and **in that** catches (36c) cooperating with a plug-in toothing (24) of the torsion spring bars (14) are provided on the bearing plates (36b).

5. Torsion spring bar system according to claim 4, **characterised in that** the catches (36c) are inwardly-toothed bearing sleeves which cooperate with the respective plug-in toothing (24) of the torsion spring bars (14).

6. Torsion spring bar system according to any one of the preceding claims, **characterised in that** the actuator (12) is formed from an electric motor (26) and a gear (28) and **in that** the electric motor (26) of the actuator (12) is arranged axially-parallel to the torsion spring bars (14) and outputs to the tubular bar (22) by means of a wrap-around drive (30) with an output wheel (30a) in a hollow shaft construction.

7. Torsion spring bar system according to claim 6, **characterised in that** the wrap-around drive (30) outputs to the gear (28) designed coaxially to the torsion spring bars (14) and in a hollow shaft construction and said gear outputs to the torsion spring bars (14).

8. Torsion spring bar system according to any one of the preceding claims 1 to 5, **characterised in that** the actuator (12) is designed with the electric motor (26) and the gear (28) in a hollow shaft construction and outputs coaxially to the torsion spring bars (14).

9. Torsion spring bar system according to any one of the preceding claims, **characterised in that** each of the torsion spring bars (14) is at least divided in two and with a tubular bar (22) running to the vehicle centre (18) and a radially inner solid bar (20), wherein the solid bar (20) is attached to the actuator (12) and it is connected directly or indirectly to the output lever (16) in the back drive through the tubular bar (22).

## Revendications

1. Système à barre de torsion pour une suspension de roue d'un véhicule automobile, avec une barre de torsion (14) orientée transversalement au centre longitudinal de véhicule (18) de chaque côté de véhicule, qui agit sur respectivement un élément de guidage de roue de la suspension de roue avec une précontrainte variable par le biais d'un levier de sortie extérieur (16) par rapport au centre longitudinal de véhicule (18), dans lequel la barre de torsion (14) peut être sollicitée avec un couple de torsion au moyen d'un actionneur (12), **caractérisé en ce que** les barres de torsion (14) sont couplées l'une à l'autre à leurs deux extrémités axialement adjacentes dans le centre longitudinal de véhicule (18) par le biais d'au moins un élément de torsion (36) supplémentaire.

2. Système à barre de torsion selon la revendication 1, **caractérisé en ce que** l'élément de torsion (36) présente une caractéristique progressive à mesure que le couple de torsion agissant dessus augmente.

3. Système à barre de torsion selon la revendication 1 ou 2, **caractérisé en ce que** l'élément de torsion (36) présente par un corps élastomère (36a) avec circonférence extérieure à symétrie de rotation relié aux extrémités côté frontal des barres de torsion (14).

4. Système à barre de torsion selon l'une quelconque des revendications précédentes, **caractérisé en ce que** l'élément de torsion (36) est formé d'un corps élastomère (36a) vulcanisé entre deux plaques de palier (36b) de diamètre plus grand, et que des entraîneurs (36c) coopérant avec une denture d'enfichage (24) des barres de torsion (14) sont prévus au niveau des plaques de palier (36b).

5. Système à barre de torsion selon la revendication 4, **caractérisé en ce que** les entraîneurs (36c) sont des douilles de palier à denture intérieure, qui coopèrent avec la denture d'enfichage respective (24) des barres de torsion (14).

6. Système à barre de torsion selon l'une quelconque des revendications précédentes, **caractérisé en ce que** l'actionneur (12) est formé d'un moteur électrique (26) et d'une transmission (28), et que le moteur électrique (26) de l'actionneur (12) est agencé parallèlement à l'axe par rapport aux barres de torsion (14) et sort au moyen d'un mécanisme d'enroulement (30) avec une roue de sortie (30a) dans une construction à arbre creux sur la barre tubulaire (22).

7. Système à barre de torsion selon la revendication 6, **caractérisé en ce que** le mécanisme d'enroulement (30) sort sur la transmission (28) réalisée coaxialement aux barres de torsion (14) et dans une construction à arbre creux et celle-ci sort sur les barres de torsion (14).

8. Système à barre de torsion selon l'une quelconque des revendications précédentes 1 à 5, **caractérisé en ce que** l'actionneur (12) est réalisé avec le moteur électrique (26) et la transmission (28) dans une construction à arbre creux et coaxialement aux barres de torsion (14).

9. Système à barre de torsion selon l'une quelconque des revendications précédentes, **caractérisé en ce que** chacune des barres de torsion (14) est au moins divisée en deux, et ce avec une barre tubulaire (22) s'étendant par rapport au centre du véhicule (18) et une barre pleine (20) radialement intérieure, dans lequel la barre pleine (20) est attachée à l'actionneur (12) et celle-ci est reliée indirectement ou directement au levier de sortie (16) dans le mécanisme de retour à travers la barre tubulure (22).
